# EUROPÄISCHE PATENTSCHRIFT

(11) **EP 2 840 297 B1**
(45) Veröffentlichungstag und Bekanntmachung des Hinweises auf die Patenterteilung: **15.06.2016**
(21) Anmeldenummer: 14002708.7
(22) Anmeldetag: 02.08.2014
(51) Int. Cl.: F21S 8/00, F21S 9/03, F21V 15/01, F21V 17/00, F21V 17/16, F21V 21/02, F21V 21/30, F21V 23/04, F21Y 115/10

(54) **Beleuchtungseinrichtung**
Illumination device
Dispositif d'éclairage

(30) Priorität: 19.08.2013 DE 102013013588
(43) Veröffentlichungstag der Anmeldung: 25.02.2015
(73) Patentinhaber: Hugo Brennenstuhl GmbH & Co. KG, 72074 Tübingen-Pfrondorf (DE)
(72) Erfinder: Hugo Brennenstuhl, D-72074 Tübingen (DE)
(74) Vertreter: Patentanwälte Magenbauer & Kollegen Partnerschaft mbB

(56) Entgegenhaltungen:
- EP-A2- 1 845 302
- DE-U1-202006 006 643
- DE-U1-202011 000 303
- DE-U1-202012 005 315
- GB-A- 2 481 850
- US-A1- 2004 090 781
- US-A1- 2006 187 656

## Beschreibung

Die Erfindung betrifft eine Beleuchtungseinrichtung, umfassend folgende Komponenten:
- einen Befestigungssockel, der eine Montageschnittstelle zu dessen Montage am Untergrund und eine Sockel-Befestigungsschnittstelle zur Befestigung eines Leuchtenträgers aufweist,
- einen ersten Leuchtenträger, der eine Träger-Befestigungsschnittstelle zur Befestigung an der zugeordneten Sockel-Befestigungsschnittstelle aufweist und eine einzelne Träger-Kopplungsschnittstelle zur Kopplung mit einer Leuchteneinheit besitzt,
- einen zweiten Leuchtenträger, der eine Träger-Befestigungsschnittstelle zur Befestigung an der zugeordneten Sockel-Befestigungsschnittstelle aufweist und mehrere Träger-Kopplungsschnittstellen zur Kopplung mit mehreren Leuchteneinheiten aufweist, wobei wahlweise der erste oder der zweite Leuchtenträger über die einander zugeordneten Befestigungsschnittstellen am Befestigungssockel befestigbar oder befestigt ist,
- mehrere Leuchteneinheiten, die jeweils ein Leuchtengehäuse und mehrere im Leuchtengehäuse aufgenommene Leuchtmittel aufweisen, wobei das Leuchtengehäuse eine Gehäuse-Kopplungsschnittstelle aufweist, über die die Leuchteneinheit an der zugeordneten Träger-Kopplungsschnittstelle mit dem Leuchtenträger koppelbar ist, wobei wahlweise eine einzelne Leuchteneinheit über die einander zugeordneten Kopplungsschnittstellen mit dem ersten Leuchtenträger koppelbar oder gekoppelt ist oder eine oder mehrere Leuchteneinheiten über die einander zugeordneten Kopplungsschnittstellen mit dem zweiten Leuchtenträger koppelbar oder gekoppelt sind, wobei wenigstens eine der Leuchteneinheiten über Schwenklagermittel schwenkbar am zugeordneten Leuchtenträger lagerbar oder gelagert ist, wobei die Schwenklagermittel Bestandteile der einander zugeordneten Träger-Kopplungsschnittstelle des betreffenden Leuchtenträgers und Gehäuse-Kopplungsschnittstelle des Leuchtengehäuses der Leuchteneinheit sind, und wobei die Schwenklagermittel einen stiftartigen Schwenkachskörper und eine Schwenkachskörper-Aufnahme aufweisen, in der der Schwenkachskörper schwenkbar lagerbar oder gelagert ist.

Die DE 20 2012 005 315 U1 offenbart eine Vorrichtung zum Tragen von Lampen. Die Vorrichtung weist einen Lampenträger auf, der über eine Montageschnittstelle mit einer elektrischen Leitung verbunden werden kann. Der Lampenträger besitzt ferner mehrere Verbinder zur Verbindung einer Teleskopeinrichtung, an deren anderen Ende eine Fassung für eine Lampe angeordnet ist.

Die GB 2 481 850 A offenbart eine Beleuchtungseinrichtung mit mehreren unterschiedlich ausgebildeten Leuchtenträgern, von denen einer stabförmig ausgebildet ist und einerseits mit einem Befestigungssockel befestigt werden kann und der andererseits eine Leuchte trägt. Ein anderer Leuchtenträger besitzt mehrere Einschrauböffnungen zum Einschrauben von Leuchteneinheiten. Die Leuchteneinheiten besitzen ein stabförmiges Gehäuse, dem sich eine Gehäuse-Kopplungsschnittstelle zur Kopplung mit wahlweise dem einen oder dem anderen Leuchtenträger befindet.

Aufgabe der Erfindung ist es, eine Beleuchtungseinrichtung der eingangs erwähnten Art zu schaffen, die gegenüber Beleuchtungseinrichtungen aus dem Stand der Technik mehr Funktionen besitzt und daher individuell auf unterschiedliche Umgebungsbedingungen anpassbar ist.

Diese Aufgabe wird mit einer Beleuchtungseinrichtung mit den Merkmalen des unabhängigen Anspruchs 1 gelöst. Weiterbildungen der Erfindung sind in den Unteransprüchen dargestellt.

Die erfindungsgemäße Beleuchtungseinrichtung zeichnet sich dadurch aus, dass die Schwenklagermittel Einstellmittel zur Einstellung des Schwenkwinkels der Leuchteneinheit (39a-d) bezüglich des zugeordneten Leuchtenträgers (15a, 15b) aufweisen.

Die erfindungsgemäße Beleuchtungseinrichtung zeichnet sich durch eine hohe Modularität aus. Dabei besteht ein erfinderischer Grundgedanke darin, dass die Beleuchtungseinrichtung wahlweise aus einem vorgegebenen, begrenzten Vorrat von Bauteilen zusammengesetzt sein kann, nämlich einem Befestigungssockel, einem ersten Leuchtenträger, einem zweiten Leuchtenträger und mehreren Leuchteneinheiten. Ein weiterer erfinderischer Grundgedanke liegt darin, dass diese Baugruppe einen einheitlichen Befestigungssockel besitzt, der Basis für alle Varianten der Beleuchtungseinrichtung ist. Der Befestigungssockel besitzt eine Sockel-Befestigungsschnittstelle, und alle daran anzudockenden Bauteile, insbesondere die Leuchtenträger, besitzen eine Träger-Befestigungsschnittstelle, die mit der Sockel-Befestigungsschnittstelle kompatibel ist. Die erfindungsgemäße Beleuchtungseinrichtung besitzt also aufgrund des Vorrats von Bauteilen eine hohe Modularität und daher eine größere Funktionalität gegenüber den Beleuchtungseinrichtungen des Standes der Technik, jedoch ist der Vorrat von Bauteilen überschaubar, sodass die Teilezahl und damit auch die Größe der Baugruppe begrenzt ist.

Bei einer Weiterbildung der Erfindung besitzt der Befestigungssockel eine mit der Montageschnittstelle ausgestattete Montageplatte und ein die Sockel-Befestigungsschnittstelle aufweisendes Sockelgehäuse, wobei Montageplatte und Sockelgehäuse über Befestigungsmittel lösbar aneinander befestigbar oder befestigt sind. Bei dieser Ausgestaltung ist es also beispielsweise möglich, die Montageplatte ohne das Sockelgehäuse über die Montageschnittstelle und geeignete Befestigungsmittel, beispielsweise Befestigungsschrauben, am Untergrund, beispielsweise an einer Gebäudewand, zu befestigen. Das Sockelgehäuse kann dann im nächsten Arbeitsschritt an die bereits montierte Montageplatte montiert werden.

In besonders bevorzugter Weise umfassen die Befestigungsmittel ein mittels Federmitteln federkraftbelastetes Rastglied, das zwischen einer die Montageplatte und das Sockelgehäuse miteinander verrastenden Raststellung, in der das Rastglied in einer Rastaufnahme aufgenommen ist, und einer Freigabestellung bewegbar ist. Montageplatte und Sockelgehäuse lassen sich also mittels einer Rastverbindung miteinander verbinden, wodurch eine schnelle und einfache Montage von Montageplatte und Sockelgehäuse durchführbar ist. Ferner lässt sich das Sockelgehäuse auch bei Bedarf in schneller Weise von der Montageplatte demontieren, indem das federbelastete Rastglied aus der Rastaufnahme ausrastet.

Zweckmäßigerweise sind das federbelastete Rastglied an der Montageplatte und die Rastaufnahme am Sockelgehäuse ausgebildet. Prinzipiell wäre es jedoch auch möglich, die Rastaufnahme an der Montageplatte und das federkraftbelastete Rastglied am Sockelgehäuse auszubilden. Die erstgenannte Alternative hat jedoch den Vorteil, dass das an der Montageplatte ausgebildete federkraftbelastete Rastglied vom Benutzer mit der einen Hand zurückgedrückt werden kann, während die andere Hand des Benutzers die ausrastende Rastaufnahme vom Rastglied wegnimmt.

In besonders bevorzugter Weise weist die Rastaufnahme eine Rastöffnung auf, in die das Rastglied durch eine Einfahr- und Schwenkbewegung einführbar und von dort bei mit dem Sockelgehäuse verrasteter Montageplatte durch Beaufschlagung des Rastglieds entgegen der Federkraft der Federmittel wieder ausfahrbar ist.

Es ist möglich, dass das Sockelgehäuse einen Aufnahmeschacht aufweist, in dem eine Akkueinheit mit wenigstens einem Akku oder ein Netzteil aufgenommen ist.

Besonders zweckmäßig ist es, dass am Sockelgehäuse Kontaktierungselemente zur elektrischen Kontaktierung von Gegenkontakten angeordnet sind, wobei Letztere an der Montageplatte ausgebildet sind. Bei dieser Ausgestaltung befindet sich die Stromversorgung mit den Kontaktierungselementen also komplett im Sockelgehäuse und muss daher bei der Montage der Montageplatte am Untergrund nicht mitmontiert werden. Dadurch ist die Montageplatte relativ leicht handhabbar, weil an ihr die sperrige Stromversorgungseinheit fehlt und lediglich die Gegenkontakte zur Kontaktierung der Kontaktierungselemente ausgebildet sind.

Bei einer Weiterbildung der Erfindung weist der Befestigungssockel eine Sockel-Bestückungsschnittstelle zu dessen Bestückung mit einem Bewegungsmelder auf. Ferner ist ein Bewegungsmelder vorgesehen, der eine Bewegungsmelder-Bestückungsschnittstelle aufweist, über die er am Befestigungssockel befestigbar oder befestigt ist. Der Bewegungsmelder kann beispielsweise als Infrarot-Bewegungsmelder ausgebildet sein. Der Bewegungsmelder dient zur Steuerung des Einschaltvorgangs der Leuchtmittel und überträgt bei Detektion einer Bewegung ein Steuersignal, wodurch das Einschalten der Leuchtmittel ausgelöst wird.

Bei einer Weiterbildung der Erfindung weisen der erste und der zweite Leuchtenträger jeweils einen gehäuseartigen, mit der Träger-Befestigungsschnittstelle ausgestatteten Basisabschnitt und einen mit der wenigstens einen Träger-Kopplungsschnittstelle ausgestatteten Lagerabschnitt auf. Die Träger-Befestigungsschnittstelle ist kompatibel mit der Sockel-Befestigungsschnittstelle am Befestigungssockel. Zweckmäßigerweise unterscheidet sich die Träger-Befestigungsschnittstelle am ersten Leuchtenträger nicht von der Träger-Befestigungsschnittstelle am zweiten Leuchtenträger.

Es ist wenigstens eine der Leuchteneinheiten über Schwenklagermittel schwenkbar am zugeordneten Leuchtenträger lagerbar oder gelagert. Damit können die Leuchtmittel derart ausgerichtet werden, dass eine optimale Ausleuchtung des auszuleuchtenden Bereichs stattfindet. Es ist beispielsweise möglich, dass die Schwenklagermittel derart ausgebildet sind, dass die Leuchteneinheit und damit die Leuchtmittel in unterschiedlichen Ebenen verschwenkt werden können, beispielsweise ließe sich bei einer Wandinstallation der Beleuchtungseinrichtung der Neigungswinkel bezüglich der Wand verändern und/oder es wäre eine Seitenverstellung beziehungsweise - verschwenkung denkbar, bei der die Leuchteneinheit um eine im Wesentlichen senkrecht zum Untergrund ausgerichtete Schwenkachse verschwenkbar ist.

Die Schwenklagermittel sind Bestandteile der einander zugeordneten Träger-Kopplungsschnittstelle des betreffenden Leuchtenträgers und Gehäuse-Kopplungsschnittstelle des Leuchtengehäuses der Leuchteneinheit.

Die Schwenklagermittel weisen einen stiftartigen Schwenkachskörper und eine Schwenkachskörper-Aufnahme auf, in der der Schwenkachskörper schwenkbar lagerbar oder gelagert ist, wobei vorzugsweise der Schwenkachskörper Bestandteil der Träger-Kopplungsschnittstelle und die Schwenkachskörper-Aufnahme Bestandteil der Gehäuse-Kopplungsschnittstelle ist.

Die Schwenklagermittel weisen Einstellmittel zur Einstellung des Schwenkwinkels der Leuchteneinheit bezüglich des zugeordneten Leuchtenträgers auf. Es ist möglich, dass der Schwenkwinkel stufenlos oder in Stufen abgestuft verstellbar ist. Zweckmäßigerweise weisen die Einstellmittel miteinander korrespondierende Verzahnungselemente einerseits an der Träger-Kopplungsschnittstelle und andererseits an der Gehäuse-Kopplungsstelle auf. Sind Leuchtengehäuse und Leuchtenträger miteinander gekoppelt, so greifen die miteinander korrespondierenden Verzahnungselemente ineinander ein und legen einen Schwenkwinkel fest. Zur Änderung des Schwenkwinkels können die Verzahnungselemente auβer Eingriff gebracht und das Leuchtengehäuse gegenüber dem Leuchtenträger verschwenkt werden.

Bei einer Weiterbildung der Erfindung umfassen die Leuchtmittel einer jeweiligen Leuchteneinheit wenigstens eine LED. Es ist jedoch auch denkbar, andere Leuchtmittel einzusetzen.

Bei einer Weiterbildung der Erfindung ist wenigstens eine der Leuchteneinheiten mit einem Leuchtengehäuse mit Klarscheibe zur Abdeckung der Leuchtmittel und wenigstens eine Leuchteneinheit mit einem Leuchtengehäuse mit Streuscheibe zur Abdeckung der Leuchtmittel ausgestattet, wobei wahlweise eine einzelne Leuchteneinheit mit Klarscheibe oder eine einzelne Leuchteneinheit mit Streuscheibe am ersten Leuchtenträger lagerbar oder gelagert ist oder mehrere Leuchteneinheiten mit Klarscheibe und/oder Streuscheibe am zweiten Leuchtenträger lagerbar oder gelagert sind. Wird also beispielsweise der zweite Leuchtenträger mit seiner Mehrfach-Träger-Kopplungsschnittstelle eingesetzt, kann eine Doppel- oder Mehrfach-Leuchte gebildet werden. Bei den Doppel- oder Mehrfach-Leuchten lassen sich dann Leuchteneinheiten mit Streuscheibe und Klarscheibe beliebig kombinieren oder es werden lediglich Klarscheiben oder lediglich Streuscheiben eingesetzt.

Bei einer Weiterbildung der Erfindung umfasst die Beleuchtungseinrichtung ein Solarmodul zur Energieversorgung der Leuchtmittel der wenigstens einen angekoppelten Leuchteneinheit. Die Energieübertragung zwischen Solarmodul und Leuchtmittel erfolgt zweckmäßigerweise mittels einer Übertragungsleitung, beispielsweise Versorgungskabel. Alternativ wäre es auch möglich, die Beleuchtungseinrichtung netzbetrieben mit Energie zu versorgen. Theoretisch wäre auch eine drahtlose Energieübertragung denkbar, beispielsweise durch ein auf die verwendeten Akku der Akkueinheit einwirkendes elektromagnetisches Feld, das in der Lage ist, die Akkus aufzuladen.

Bei solarbetriebenen Beleuchtungseinrichtungen wird zweckmäßigerweise ein Bewegungsmelder eingesetzt, der das Einschalten der Leuchtmittel steuert, die dann beispielsweise mittels einer Zeitschaltuhr wieder nach einer bestimmten voreinstellbaren Zeit ausgeschaltet werden. Dadurch wird die Lebensdauer der Akkus deutlich erhöht.

Bevorzugte Ausführungsbeispiele der Erfindung sind in der Zeichnung dargestellt und werden im Folgenden näher erläutert. In der Zeichnung zeigen:
- Figur 1: die Struktur der erfindungsgemäßen Beleuchtungseinrichtung in präferierten Ausbaustufen, wobei der Befestigungssockel, die beiden Leuchtenträger, die Leuchteneinheiten und ein Solarmodul jeweils perspektivisch beziehungsweise in einer Seitenansicht dargestellt sind,
- Figur 2: eine perspektivische Darstellung des Befestigungssockels aus Figur 1,
- Figur 3: eine perspektivische Unteransicht des Befestigungssockels aus Figur 2,
- Figur 4: eine perspektivische Darstellung einer ersten Ausführungsform des Sockelgehäuses,
- Figur 5: eine perspektivische Darstellung der Montageplatte, zugehörig zum Sockelgehäuse aus Figur 4,
- Figur 6: eine perspektivische Darstellung der dem Sockelgehäuse zugewandten Vorderseite der Montageplatte von Figur 5,
- Figur 7: eine zweite Ausführungsform des Sockelgehäuses in perspektivischer Darstellung,
- Figur 8: eine perspektivische Darstellung der Montageplatte, zugehörig zum Sockelgehäuse aus Figur 7,
- Figur 9: eine perspektivische Unteransicht des ersten Leuchtenträgers,
- Figur 10: eine perspektivische Draufsicht auf den Leuchtenträger von Figur 9,
- Figur 11: eine perspektivische Unteransicht auf den zweiten Leuchtenträger,
- Figur 12: eine perspektivische Seiten-/Oberansicht auf den Leuchtenträger von Figur 11,
- Figur 13: eine perspektivische Darstellung auf eine erste Ausführungsform einer Leuchteneinheit,
- Figur 14: eine perspektivische Darstellung einer zweiten Ausführungsform einer Leuchteneinheit,
- Figur 15: eine perspektivische Darstellung einer dritten Ausführungsform der Leuchteneinheit,
- Figur 16: eine perspektivische Darstellung einer vierten Ausführungsform der Leuchteneinheit,
- Figur 17: eine perspektivische Darstellung des Solarmoduls aus Figur 1,
- Figur 18: eine vergrößerte perspektivische Darstellung auf den Montagesockel des Solarmoduls aus Figur 17,
- Figur 19: eine komplett montierte Beleuchtungseinrichtung gemäß erster Ausführungsform,
- Figur 20: eine komplett montierte Beleuchtungseinrichtung gemäß zweiter Ausführungsform und
- Figur 21: eine komplett montierte Beleuchtungseinrichtung gemäß dritter Ausführungsform.

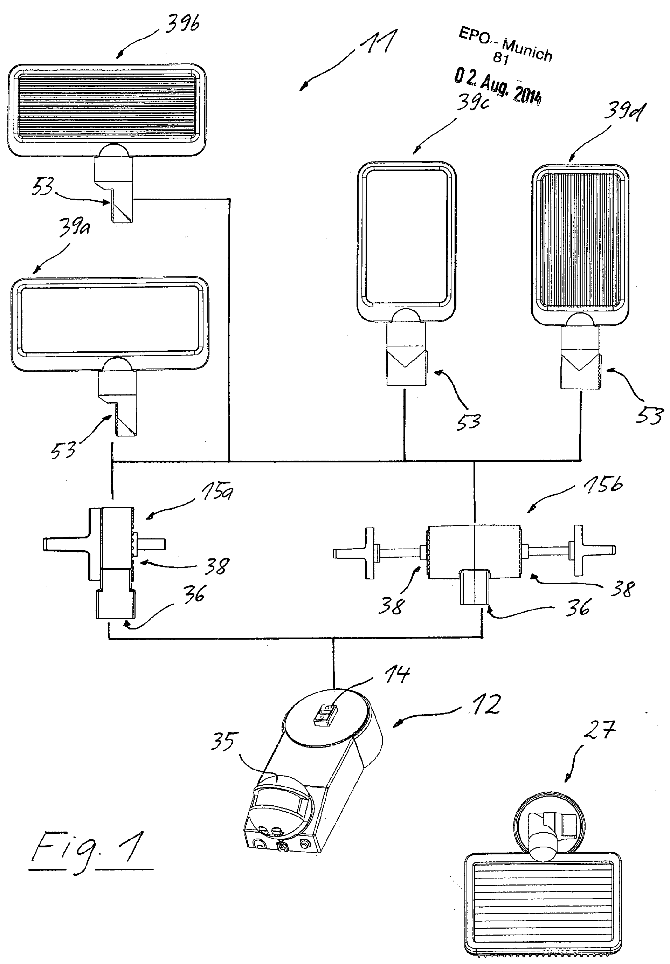

Die Figuren 1 bis 21 zeigen bevorzugte Ausführungsbeispiele der erfindungsgemäßen Beleuchtungseinrichtung 11.

Wie insbesondere in Figur 1 dargestellt, ist die Beleuchtungseinrichtung 11 eine modulare Baugruppe, bestehend aus mehreren Baugruppenelementen, die ganz individuell zur gewünschten Beleuchtungseinrichtung zusammenmontiert werden können. Dadurch kann die Beleuchtungseinrichtung 11 an unterschiedliche Umgebungsbedingungen angepasst werden. Ferner ist es möglich, eine bereits installierte Beleuchtungseinrichtung auch nachträglich noch zu modifizieren, wenn sich beispielsweise die Umgebungsbedingungen ändern.

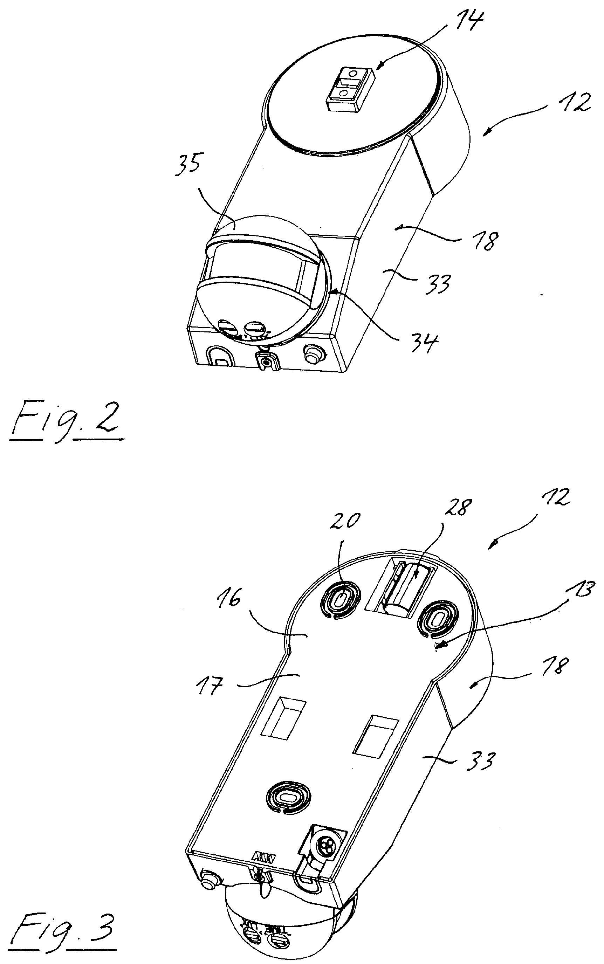

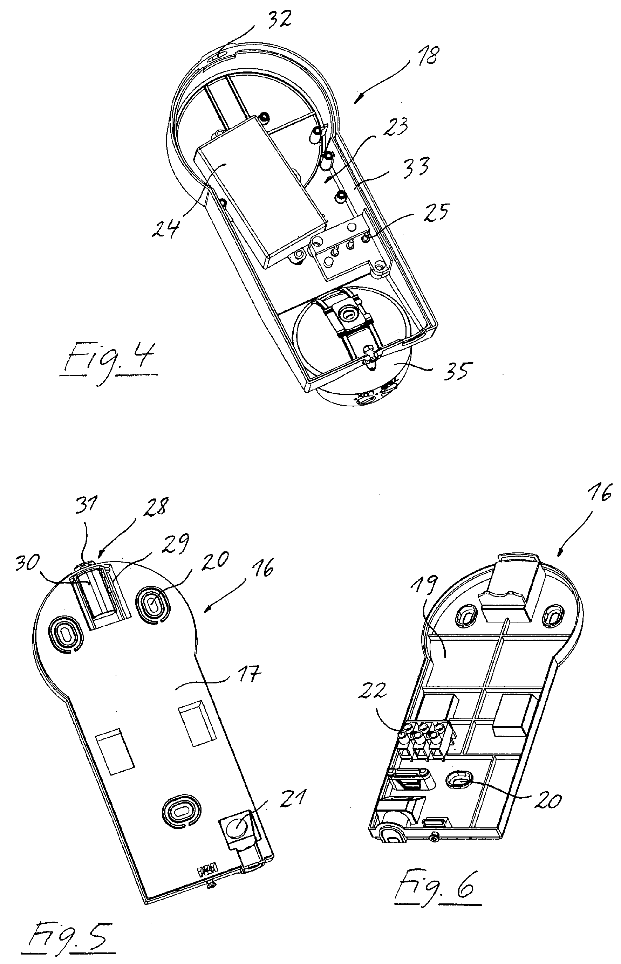

Das erste Baugruppenelement der modularen Baugruppe ist ein Befestigungssockel 12, der insbesondere aus Metallmaterial, insbesondere Leichtmetall-Material, beispielsweise Aluminium, besteht. Alternativ wäre es auch möglich, dass der Befestigungssockel aus Kunststoff-Material besteht. Der Befestigungssockel 12 besitzt eine Montageschnittstelle 13, über die er am Untergrund, beispielsweise einer Gebäudewand, montiert werden kann. Die Montageschnittstelle ist in den Figuren 3 und 5 näher dargestellt. Ferner besitzt der Befestigungssockel 12 eine Sockel-Befestigungsschnittstelle 14 zur Befestigung eines nachfolgend noch detaillierter beschriebenen Leuchtenträgers 15a, 15b.

Wie insbesondere die Zusammenschau der Figuren 2 bis 8 zeigt, ist der Befestigungssockel 12 mehrteilig ausgebildet und besitzt hierzu eine Montageplatte 16, an der die Montageschnittstelle 13 ausgebildet ist. Die insbesondere in den Figuren 5, 6 und 8 dargestellte Montageplatte 16 besitzt eine Rückseite 17, an der die Montageschnittstelle 13 ausgebildet ist, und eine einem Sockelgehäuse 18 zugewandte Vorderseite 19. Wie beispielsweise in der Figur 5 zu erkennen, ist die Montageplatte 16 von mehreren Montagelöchern 20 durchsetzt, durch die geeignete Befestigungsmittel, beispielsweise Befestigungsschrauben, hindurchgeführt werden können, um die Montageplatte 16 am Untergrund zu befestigen. Ferner ist die Montageplatte 16 von einer Anschlussöffnung 21 durchsetzt, durch die hindurch ein Verbindungskabel (nicht dargestellt) hindurchführbar ist und das an an der Vorderseite 19 der Montageplatte 16 ausgebildete Gegenkontakte 22 klemmbar oder geklemmt ist.

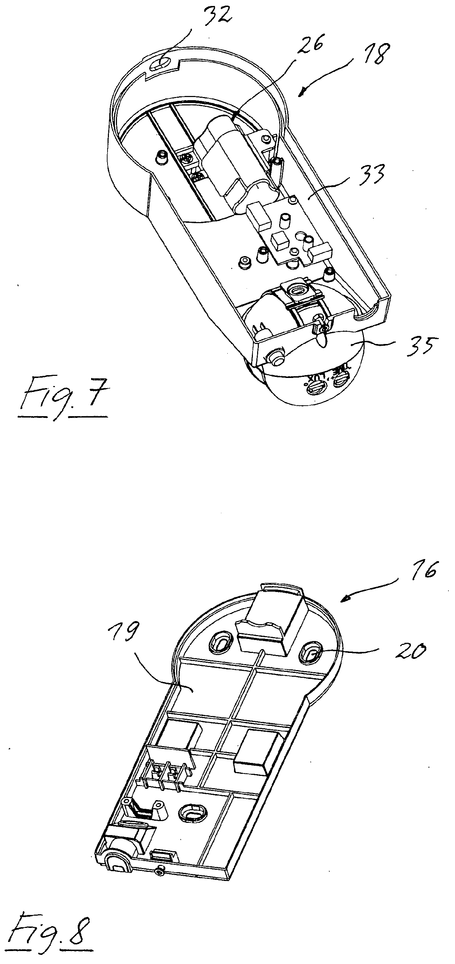

Zum Befestigungssockel 12 gehört ferner das bereits erwähnte Sockelgehäuse 18, in dem die Stromversorgung der Beleuchtungseinrichtung 11 untergebracht ist. Wie insbesondere die Zusammenschau der Figuren 4 und 7 zeigt, kann die Beleuchtungseinrichtung 11 wahlweise netzbetrieben oder netzunabhängig mittels Solarenergie betrieben werden.

Das Sockelgehäuse 18 besitzt einen Aufnahmeschacht 23, in dem im Falle eines Netzbetriebs ein Netzteil 24 untergebracht ist. Ferner sind im Aufnahmeschacht 23 Kontaktierungselemente 25 vorgesehen, die beim Zusammenbau von Sockelgehäuse 18 und Montageplatte 16 die an der Montageplatte 16 ausgebildeten Gegenkontakte 22 kontaktieren.

Wie insbesondere in Figur 6 dargestellt, sind die an der Montageplatte 16 ausgebildeten Gegenkontakte 22 als Klemmleiste oder Lüsterklemme ausgebildet. Die Kontaktierungselemente 25 am Sockelgehäuse 18 sind hingegen als Kontaktierungsstifte ausgebildet, die beim Zusammenbau von Sockelgehäuse 18 und Montageplatte 16 in zugeordnete Anschlussöffnungen der Klemmleiste einfahren und somit einen Kontakt herstellen. Bei dieser Variante wird beim Zusammenbau von Montageplatte 16 und Sockelgehäuse 18 gleichzeitig auch bereits der Kontakt hergestellt. Alternativ wäre es jedoch auch denkbar, insbesondere am Sockelgehäuse 18 einen Stecker anzubringen, der dann zur Kontaktierung auf die an der Montageplatte 16 ausgebildeten Gegenkontakte 22 aufsteckbar ist.

Bei der Befestigung des Befestigungssockels 12 am Untergrund, beispielsweise also an einer Gebäudewand, wird in vorteilhafter Weise lediglich die Montageplatte 16 montiert, die in einfacher Weise handhabbar ist, da die Stromversorgung komplett im Sockelgehäuse 18 untergebracht ist, das zunächst nicht mitmontiert wird. Nach der Montage der Montageplatte 16 kann dann das Sockelgehäuse 18 aufgesetzt und mit der Montageplatte 16 verbunden werden. Dabei erfolgt die Kontaktierung automatisch beim Zusammenbau von Sockelgehäuse 18 und Montageplatte 16 oder es muss zuvor der Stecker auf die zugehörigen Gegenkontakte 22 an der Montageplatte aufgesteckt werden. Wie insbesondere in Figur 7 dargestellt, ist die Beleuchtungseinrichtung 11 alternativ zum Netzbetrieb auch mittels Solarenergie betreibbar. In diesem Fall nimmt der Aufnahmeschacht 23 eine Akkueinheit 26 mit wenigstens einem Akku auf. Da sowohl das Netzteil 24 für den Netzbetrieb als auch die Akkueinheit 26 für den Solarbetrieb über geeignete Befestigungsmittel im Aufnahmeschacht 23 befestigt sind, lässt sich die Beleuchtungseinrichtung 11 auch von Netzbetrieb auf Solarbetrieb umstellen und umgekehrt. Bei Solarbetrieb kommt ferner ein nachfolgend noch näher beschriebenes Solarmodul 27 zum Einsatz, über das die Versorgungsenergie bereitgestellt wird und die Akkus der Akkueinheit 26 aufgeladen werden.

Zum Zusammenbau von Sockelgehäuse 18 und Montageplatte 16 dienen Befestigungsmittel, die derart ausgebildet sind, dass eine werkzeuglose Verrastung von Sockelgehäuse 18 und Montageplatte 16 möglich ist. Dadurch ist ein schneller und einfacher Zusammenbau von Montageplatte 16 und Sockelgehäuse 18 möglich. Die Befestigungsmittel umfassen ein mittels Federmitteln (nicht dargestellt) federkraftbelastetes Rastglied 28, das zwischen einer Raststellung (Figur 3, Figur 5) und einer Freigabestellung (nicht dargestellt) bewegbar ist. Das Rastglied 28 wird durch die Federmittel in die Raststellung gedrückt, sodass das Rastglied 28 zur Bewegung in die Freigabestellung gegen die Federkraft der Federmittel zurückgedrückt werden muss.

Wie insbesondere in Figur 5 gezeigt, ist das Rastglied 28 an der Montageplatte 16 angeordnet. Hierzu besitzt die Montageplatte 16 einen Aufnahmeschacht 29, in dem das Rastglied 28 aufgenommen und zwischen der Rast- und Freigabestellung beweglich geführt ist. Das Rastglied 28 besitzt einen Basisabschnitt 30, der stets im Aufnahmeschacht 29 aufgenommen ist, und einen Betätigungsabschnitt 31, der nach Art eines Druckknopfes in der Raststellung vom Rand der Montageplatte 16 nach außen absteht. Der Betätigungsabschnitt 31 ragt also vom Rand der Montageplatte 16 hervor.

Zu den Befestigungsmitteln zählt ferner eine am Sockelgehäuse 18 ausgebildete Rastaufnahme in Form einer Rastöffnung 32, die einen Wandabschnitt 33 des Sockelgehäuses 18 durchsetzt.

Der Zusammenbau von Sockelgehäuse 18 und Montageplatte 16 erfolgt nach zuvor bereits durchgeführter Montage der Montageplatte 16 am Untergrund, beispielsweise einer Gebäudewand, derart, dass das Sockelgehäuse 18 durch eine kombinierte Einfahr- und Schwenkbewegung auf die Montageplatte 16 aufgesetzt und die Rastöffnung 32 an das Rastglied 28 herangeführt wird, sodass das Rastglied 28 die Rastöffnung 32 durchsetzt, sodass die Oberseite des Betätigungsabschnitts 31 ungefähr auf Ebene des Wandabschnitts 33 des Sockelgehäuses 18 liegt oder alternativ der Betätigungsabschnitt 31 vom Wandabschnitt 33 des Sockelgehäuses 18 hervorsteht.

Bei der Demontage kann der Benutzer mit der einen Hand mittels Fingerdruck auf den Betätigungsabschnitt 31 des Rastglieds dieses in die Freigabestellung drücken, während die andere Hand des Benutzers das Sockelgehäuse 18 abnimmt.

Der Befestigungssockel 12 besitzt ferner eine Sockel-Bestückungsschnittstelle 34 zu dessen Bestückung mit einem Bewegungsmelder 35. Der Bewegungsmelder kann beispielsweise als Infrarot-Bewegungsmelder ausgestaltet sein. Ein Bewegungsmelder macht insbesondere bei der solarbetriebenen Variante der Beleuchtungseinrichtung 11 Sinn, da er den Einschaltvorgang der Beleuchtungseinrichtung 11 steuert, wobei die Beleuchtungseinrichtung 11 dann nach einer bestimmten Zeitdauer, beispielsweise über eine Zeitschaltuhr gesteuert, wieder ausschalten kann. Dadurch können die Akkus der Akkueinheit 26 geschont werden, da sie ja lediglich über eine kurze Zeitdauer Energie für die Beleuchtungseinrichtung 11 zur Verfügung stellen müssen.

Weitere Baugruppenelemente der Beleuchtungseinrichtung 11 sind ein erster und ein zweiter Leuchtenträger 15a, 15b.

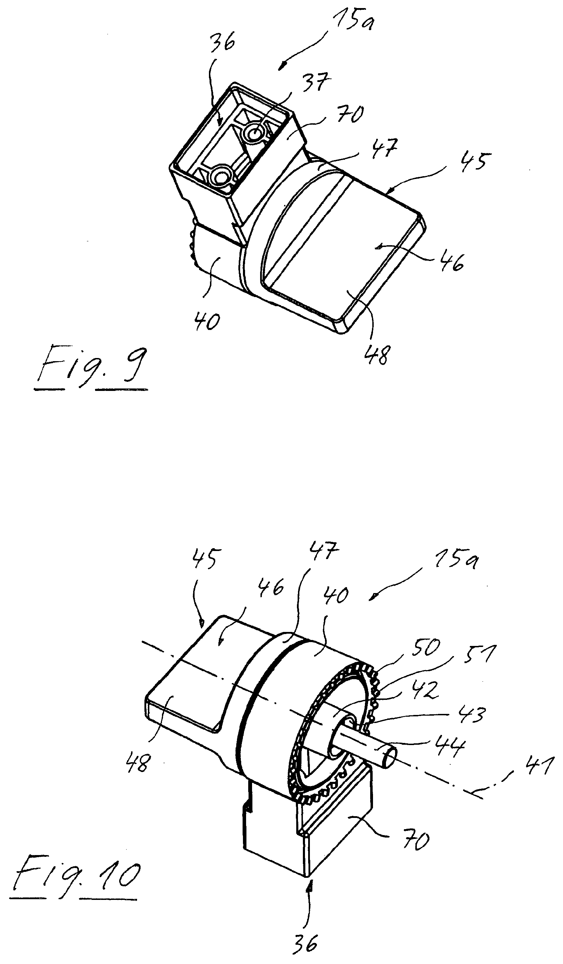

Der in den Figuren 9 und 10 beispielhaft dargestellte erste Leuchtenträger 15a besitzt eine Träger-Befestigungsschnittstelle 36, die mit der Sockel-Befestigungsschnittstelle 14 am Befestigungssockel 12 kompatibel ist, wodurch der erste Leuchtenträger 15a über die einander zugeordneten Befestigungsschnittstellen 14, 36 an dem Befestigungssockel 12 montiert werden kann.

Der erste Leuchtenträger 15a besitzt einen gehäuseartigen Basisabschnitt 70, der im gezeigten Beispielsfall quaderartig ausgestaltet sein kann. An dem Basisabschnitt 70 befindet sich die Träger-Befestigungsschnittstelle 36, die zwei Aufnahmehülsen 37 zur Aufnahme geeigneter Befestigungsmittel, beispielsweise Befestigungsschrauben, besitzt, die, wie insbesondere in Figur 7 dargestellt, von der Seite des Sockelgehäuses 18 her über die Sockel-Befestigungsschnittstelle 14 in die Aufnahmehülsen 37 eingeschraubt werden können, wodurch der erste Leuchtenträger 15a über die einander zugeordneten Befestigungsschnittstellen 14, 36 am Befestigungssockel 12 befestigt ist.

Der erste Leuchtenträger 15a besitzt ferner eine Träger-Kopplungsschnittstelle 38 zur Kopplung mit einer Leuchteneinheit 39a-d. Die Träger-Kopplungsschnittstelle 38 befindet sich an einem einstückig mit dem Basisabschnitt 70 ausgebildeten Lagerabschnitt 40, der im Beispielsfall zylindrisch ausgebildet ist. Im Beispielsfall ist der Mantel des zylindrischen Lagerabschnitts 40 einstückig mit dem Basisabschnitt verbunden.

Wie insbesondere in Figur 10 dargestellt, sind am Lagerabschnitt 40 Komponenten von Schwenklagermitteln angeordnet, um die Leuchteneinheit 39 schwenkbar am zugeordneten Leuchtenträger zu lagern. Zu den Schwenklagermitteln gehört eine eine erste Schwenkachse 41 definierende, am Lagerabschnitt 40 konzentrisch zur Mantelfläche des Lagerabschnitts ausgebildete Lagerhülse 42. Die Lagerhülse 42 definiert eine Lageröffnung 43, die von einem Schwenkachskörper in Form eines Lagerstifts 44 eines Klemmteils 45 durchsetzt ist. Der Lagerstift 44 ragt von der Lagerhülse 42 nach außen ab und besitzt an seinem von der Lagerhülse 42 abstehenden freien Ende zweckmäßigerweise ein Gewinde (nicht dargestellt), das in eine zugeordnete Schwenkachskörper-Aufnahme in Form einer Lagerhülse 71 der Leuchteneinheit 39 eingeschraubt werden kann. Das Klemmteil 45 besitzt einen Drehbetätigungsabschnitt 46, der einen im Wesentlichen mit gleichem Durchmesser wie der Lagerabschnitt 40 ausgebildeten Basisabschnitt 47 besitzt, der im eingeschraubten Zustand des Klemmteils 45 in Kontakt mit dem Lagerabschnitt 40 steht. Ferner besitzt der Drehbetätigungsabschnitt 46 des Klemmteils 45 noch einen Griffsteg 48, der von der Hand des Benutzers bequem ergriffen werden kann, um die Drehbetätigung und somit das Klemmen oder das Lösen der entsprechenden Verbindung einzuleiten.

Das Klemmteil 45 ist ferner Bestandteil von Einstellmitteln zur Einstellung des Schwenkwinkels der Leuchteneinheit 39 bezüglich des zugeordneten Leuchtenträgers 15a, 15b. Zu den Einstellmitteln zählt ferner noch eine Verzahnung 49, deren Bestandteil aus einem am Lagerabschnitt 40 an dessen Mantelfläche am stirnseitigen Rand ausgebildete Verzahnungselment in Form eines Zahnkranzes 50 aus einer Vielzahl von in Umfangsrichtung hintereinander angeordneten und sich jeweils in Axialrichtung erstreckenden Zähnen 51 besteht.

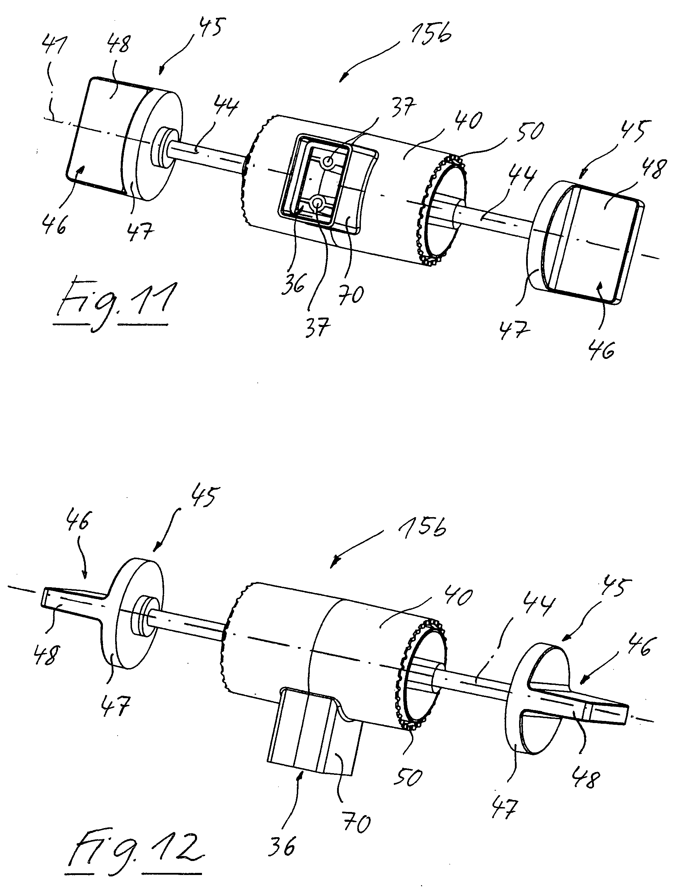

Die Beleuchtungseinrichtung 11 besitzt ferner einen zweiten Leuchtenträger 15b, der beispielhaft in den Figuren 11 und 12 gezeigt ist. Bei dem zweiten Leuchtenträger 15b ist der erste Leuchtenträger 15a quasi verdoppelt, mit der Ausnahme, dass auch der zweite Leuchtenträger 15b nur eine einzelne Träger-Befestigungsschnittstelle 36 aufweist, die identisch zur Träger-Befestigungsschnittstelle des ersten Leuchtenträgers 15a ausgebildet ist und somit ebenfalls kompatibel zur Sockel-Befestigungsschnittstelle 14 des Befestigungssockels 12 ausgebildet ist. Im Unterschied zum ersten Leuchtenträger besitzt der zweite Leuchtenträger 15b einen Lagerabschnitte 40, der beidseitig offen ist. Der Lagerabschnitt 40 ist mit zwei spiegelsymmetrisch zueinander angeordneten Lagerhülsen 42 ausgestattet, die jedoch im Gegensatz zur Lagerhülse des ersten Leuchtenträgers 15a ein Innengewinde aufweisen. Jeder Lagerhülse 42 ist ein Klemmteil 45 zugeordnet, wobei die Lagerstifte 44 der Klemmteile 45 jeweils in die zugeordnete Lagerhülse 42 einschraubbar sind. Die Klemmteile 45 sind ansonsten identisch zum Klemmteil 45 des ersten Leuchtenträgers 15a ausgebildet. Jeder Lagerabschnitt 40 besitzt wiederum einen an seiner Mantelfläche am vorderen stirnseitigen Ende ausgebildeten Zahnkranz 50, der im Wesentlichen identisch zu dem Zahnkranz des ersten Leuchtenträgers 15a ausgebildet ist.

Wie insbesondere in Figur 1 dargestellt, gehören zu der Beleuchtungseinrichtung 11 mehrere Leuchteneinheiten 39a-d, die ebenfalls als Baugruppenelemente Bestandteile der modularen Baugruppe der Beleuchtungseinrichtung 11 sind und entweder alternativ oder in Kombination miteinander mit einem zugeordneten Leuchtenträger am Befestigungssockel 12 anbringbar sind.

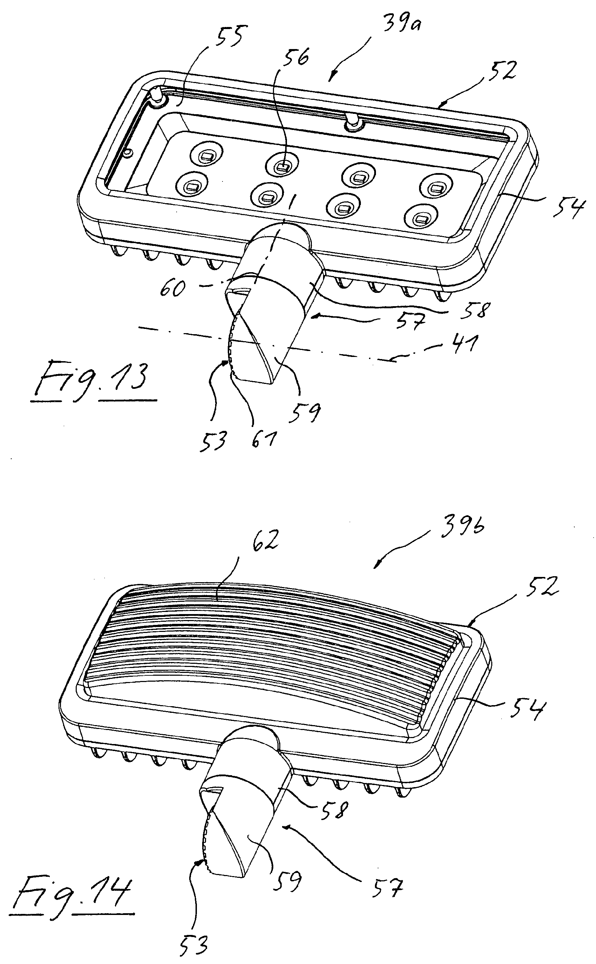

Wie beispielhaft in Figur 13 gezeigt, besitzt eine jeweilige Leuchteneinheit 39a ein Leuchtengehäuse 52, in dem Leuchtmittel aufgenommen sind. Das Leuchtengehäuse 52 besitzt eine Gehäuse-Kopplungsschnittstelle 53, die kompatibel zur Träger-Kopplungsschnittstelle des entsprechenden Leuchtenträgers 15a, 15b ausgebildet ist. Das Leuchtengehäuse 52 besitzt einen Rahmenabschnitt 54, der gemäß der in Figur 13 gezeigten ersten Ausführungsform mit einer Klarscheibe 55 versehen ist. Hinter der Klarscheibe 55 sind die Leuchtmittel, die beispielhaft in Form von LEDs 56 dargestellt sind, angeordnet. Durch die Klarscheibe 55 wird das durch die LED emittierte Licht im Wesentlichen ungestreut abgegeben, sodass die in Figur 13 gezeigte Variante auch als Strahler bezeichnet werden könnte.

Das Leuchtengehäuse 52 besitzt einen am Rahmenabschnitt 54 angesetzten Lagerfortsatz 57, der mehrteilig ausgebildet ist. Der Lagerfortsatz 57 besitzt einen einstückig mit dem Rahmenabschnitt 54 verbundenen Basisabschnitt, an dem ein Schnittstellenabschnitt 59 drehbar gelagert ist. Dadurch lässt sich der Rahmenabschnitt 54 um eine senkrecht zur ersten Schwenkachse ausgebildete zweite Schwenkachse 60 verschwenken. An dem Schnittstellenabschnitt 59 befindet sich die Gehäuse-Kopplungsschnittstelle 53 zur Kopplung mit der Träger-Kopplungsschnittstelle 38. Im in der Figur 13 gezeigten Beispielsfall ist die Leuchteneinheit 39a für den ersten Leuchtenträger 15a bestimmt. Insgesamt ergibt sich dadurch eine Einfach-Leuchte. Der Schnittstellenabschnitt 59 ist in etwa L-förmig ausgebildet und besitzt an seinem im Wesentlichen parallel zur zweiten Schwenkachse 60 ausgerichteten Schenkel einen zylindrischen Zahnkranz 61, der gemeinsam mit dem am ersten Leuchtenträger 15a ausgebildeten Zahnkranz 50 0 die erwähnte Verzahnung 49 bildet.

Der Schnittstellenabschnitt 59 besitzt wiederum eine Lagerhülse (nicht dargestellt), die mit einem Innengewinde versehen ist. In die Lagerhülse ist der mit einem Außengewinde versehene Lagerstift 44 des zugeordneten Klemmteils 45 des ersten Leuchtenträgers 15a einschraubbar. Dadurch ist die Leuchteneinheit 39a fest mit dem Leuchtenträger 15a verbunden. Gleichzeitig wird die Verzahnung 49 durch die miteinander in Eingriff stehenden Zahnkränze 50, 61 gebildet. Zur Einleitung einer Schwenkbewegung um die erste Schwenkachse 41 wird nun das Klemmteil 45 gelöst, indem der Lagerstift 44 aus der zugeordneten Lagerhülse im Schnittstellenabschnitt 59 herausgeschraubt wird, wodurch die Verzahnung 49 gelöst und die beiden Zahnkränze 50, 61 außer Eingriff zueinander gebracht werden können. Danach ist ein Verschwenken der Leuchteneinheit 39a möglich, wodurch insbesondere bei einer Wandinstallation der Neigungswinkel zwischen der Leuchteneinheit 39a und der Wand verändert werden kann. Ist der gewünschte Neigungswinkel eingestellt, so wird das Klemmteil 45 wieder festgeklemmt und die Verzahnung wiederhergestellt.

Figur 14 zeigt eine zweite Ausführungsform der Leuchteneinheit 39b. Diese Ausführungsform unterscheidet sich von der in der Figur 13 gezeigten ersten Ausführungsform dadurch, dass anstelle der Klarscheibe 55 eine insbesondere gefrostete Streuscheibe 62 eingesetzt ist. Dadurch wird das von den LEDs 56 emittierte Licht gestreut, wodurch die Ausleuchtung größerer Bereiche möglich ist. Auch die zweite Ausführungsform ist für den Einsatz in Kombination mit dem ersten Leuchtenträger 15a ausgebildet.

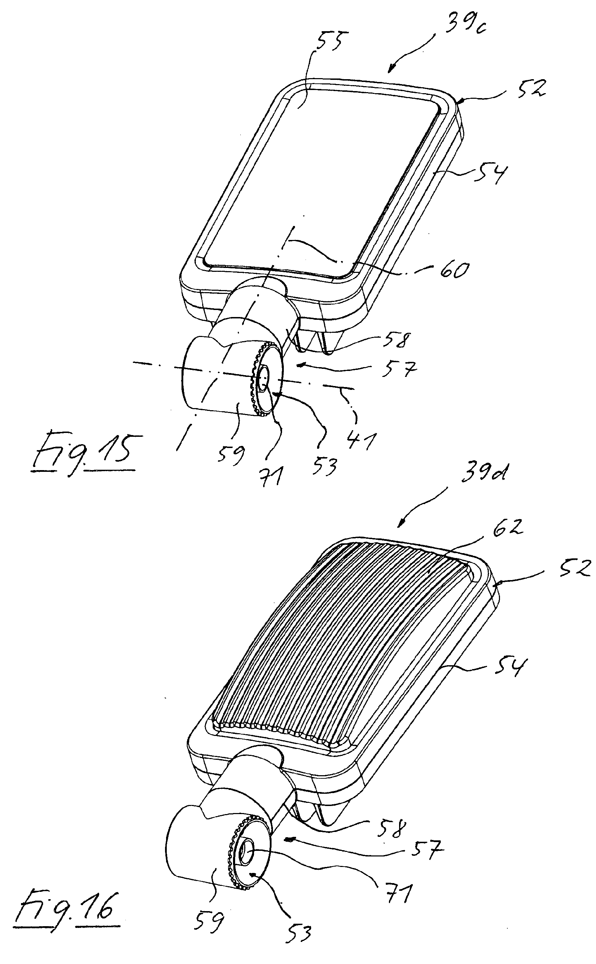

Die Figur 15 zeigt eine dritte Ausführungsform der Leuchteneinheit 39c. Diese Leuchteneinheit 39c ist insbesondere für die Verwendung mit dem zweiten Leuchtenträger 15b bestimmt. Hierzu ist der Lagerfortsatz 57 des Leuchtengehäuses 52 und insbesondere der Schnittstellenabschnitt 59 modifiziert.

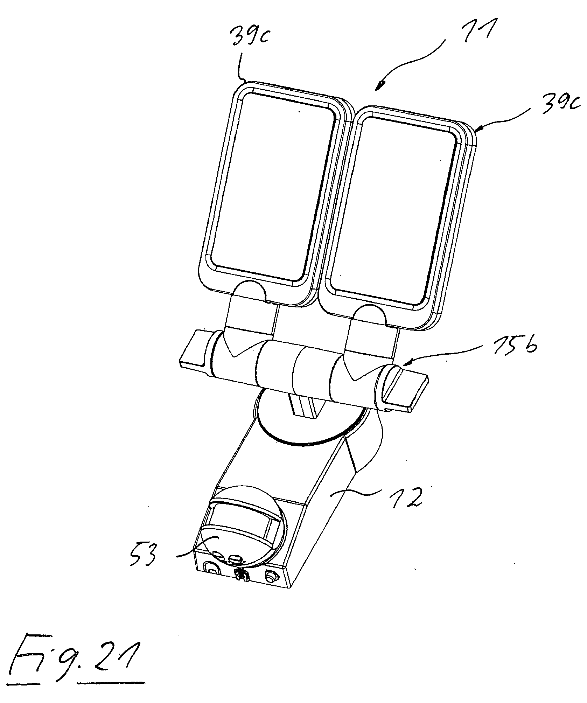

Wie insbesondere in Figur 21 gezeigt, besitzt der Schnittstellenabschnitt 59 des Leuchtengehäuses 52 der Leuchteneinheit 39c eine ohne Gewinde ausgestattete Lagerhülse, durch die hindurch der Lagerstift 44 des zugeordneten Klemmteils 45 hindurchführbar und in die Lagerhülse am Lagerabschnitt des zweiten Leuchtenträgers 15b einschraubbar ist. Ansonsten ist der Lagerfortsatz 57 dieser Leuchteneinheit 39c identisch zu den Lagerfortsätzen der ersten und zweiten Ausführungsform ausgebildet.

Die Leuchteneinheit 39c gemäß der dritten Ausführungsform ist wiederum mit einer Klarscheibe 55 ausgestattet.

Die Leuchteneinheit 39c der dritten Ausführungsform ist in Kombination mit einer weiteren Leuchte der dritten Ausführungsform beispielsweise als Doppelleuchte mit dem zweiten Leuchtenträger 15b kombinierbar, wodurch die in Figur 21 gezeigte Beleuchtungseinrichtung 11 entsteht. Alternativ wäre die Leuchteneinheit 39c auch mit der in Figur 16 gezeigten vierten Ausführungsform kombinierbar.

Diese vierte Ausführungsform der Leuchteneinheit 39d unterscheidet sich von der in Figur 15 gezeigten dritten Ausführungsform lediglich dadurch, dass anstelle der Klarscheibe 55 eine Streuscheibe 61 eingesetzt ist.

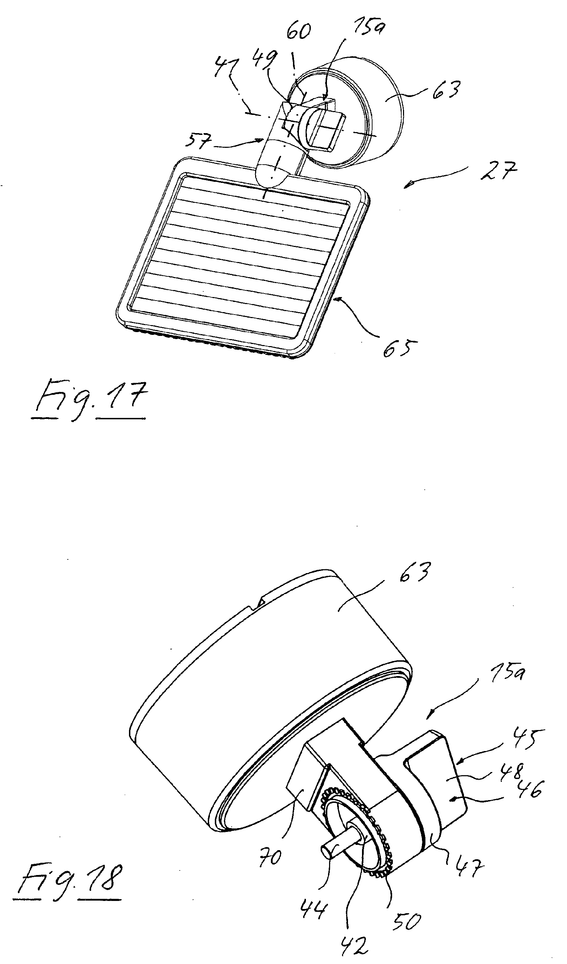

Als weiteres Baugruppenelement umfasst die Beleuchtungseinrichtung ein Solarmodul 27, das beispielhaft in Figur 17 dargestellt ist. Das Solarmodul 27 umfasst einen insbesondere in Figur 18 gezeigten Montagesockel 63, der über eine Montageschnittstelle (nicht dargestellt) am Untergrund, beispielsweise an einer Gebäudewand, befestigbar ist. Der Montagesockel 63 besitzt eine Sockel-Befestigungsschnittstelle 64, die im Wesentlichen identisch zu der Sockel-Befestigungsschnittstelle 14 des Befestigungssockels 12 ausgestaltet ist und damit insbesondere mit der Träger-Befestigungsschnittstelle 36 des ersten Leuchtenträgers 15a kompatibel ist, der dann auch alternativ mit dem Montagesockel des Solarmoduls 27 zusammenbaubar ist. An den ersten Leuchtenträger 15a ist dann wiederum in ähnlicher beziehungsweise im Wesentlichen identischer Weise wie für die Ankopplung einer Leuchteneinheit ein Solarpanel 65 ankoppelbar, das wiederum um zwei senkrecht zueinander ausgerichtete Schwenkachsen verschwenkbar ist.

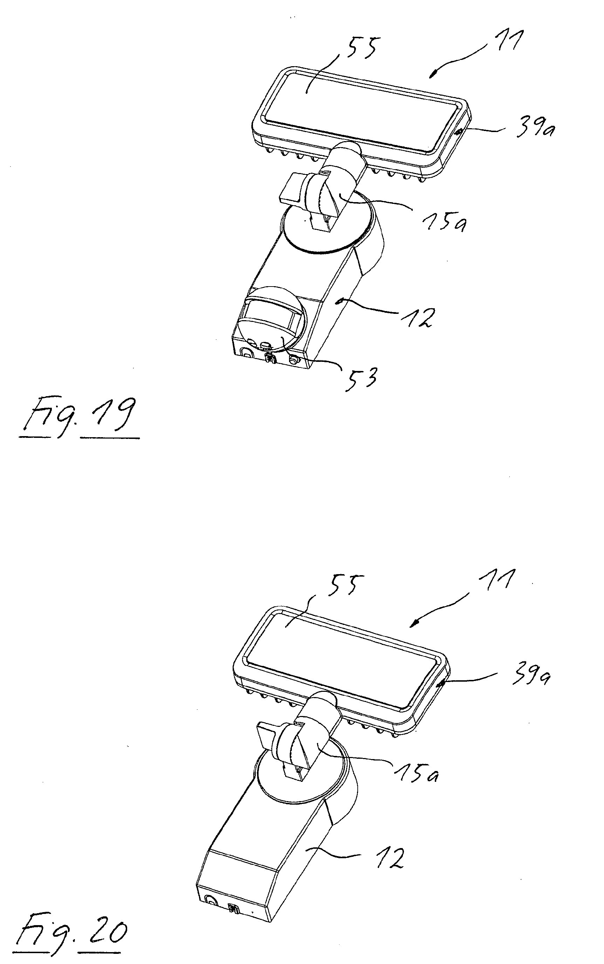

Insgesamt ergibt sich durch die in Figur 1 gezeigte Baugruppe aus mehreren Baugruppenelementen eine große Variationsmöglichkeit, sodass beispielsweise die in den Figuren 19 bis 21 gezeigten Varianten der Beleuchtungseinrichtung 11 herstellbar sind.

## Patentansprüche

1. Beleuchtungseinrichtung, umfassend folgende Komponenten:
- einen Befestigungssockel (12), der eine Montageschnittstelle (13) zu dessen Montage am Untergrund und eine Sockel-Befestigungsschnittstelle (14) zur Befestigung eines Leuchtenträgers (15a, 15b) aufweist,
- einen ersten Leuchtenträger (15a), der eine Träger-Befestigungsschnittstelle (36) zur Befestigung an der zugeordneten Sockel-Befestigungsschnittstelle (14) aufweist und eine einzelne Träger-Kopplungsschnittstelle (38) zur Kopplung mit einer Leuchteneinheit (39a,b) besitzt,
- einen zweiten Leuchtenträger (15b), der eine Träger-Befestigungsschnittstelle (36) zur Befestigung an der zugeordneten Sockel-Befestigungsschnittstelle (14) aufweist und mehrere Träger-Kopplungsschnittstellen (38) zur Kopplung mit mehreren Leuchteneinheiten (39a-d) aufweist, wobei wahlweise der erste oder der zweite Leuchtenträger (15a, 15b) über die einander zugeordneten Befestigungsschnittstellen (14, 36) am Befestigungssockel (12) befestigbar oder befestigt ist,
- mehrere Leuchteneinheiten (39a-d), die jeweils ein Leuchtengehäuse (52) und mehrere im Leuchtengehäuse (52) aufgenommene Leuchtmittel aufweisen, wobei das Leuchtengehäuse (52) eine Gehäuse-Kopplungsschnittstelle (53) aufweist, über die die Leuchteneinheit (39a-d) an der zugeordneten Träger-Kopplungsschnittstelle (38) mit dem Leuchtenträger (15a, 15b) koppelbar ist, wobei wahlweise eine einzelne Leuchteneinheit (39a,b) über die einander zugeordneten Kopplungsschnittstellen (38, 53) mit dem ersten Leuchtenträger (15a) koppelbar oder gekoppelt ist oder eine oder mehrere Leuchteneinheiten (39a-d) über die einander zugeordneten Kopplungsschnittstellen (38, 53) mit dem zweiten Leuchtenträger (15b) koppelbar oder gekoppelt sind, wobei wenigstens eine der Leuchteneinheiten (39a-d) über Schwenklagermittel schwenkbar am zugeordneten Leuchtenträger (15a, 15b) lagerbar oder gelagert ist, wobei die Schwenklagermittel Bestandteile der einander zugeordneten Träger-Kopplungsschnittstelle (38) des betreffenden Leuchtenträgers (15a, 15b) und Gehäuse-Kopplungsschnittstelle (53) des Leuchtengehäuses (52) der Leuchteneinheit (39a-d) sind, und wobei die Schwenklagermittel einen stiftartigen Schwenkachskörper und eine Schwenkachskörper-Aufnahme aufweisen, in der der Schwenkachskörper schwenkbar lagerbar oder gelagert ist, **dadurch gekennzeichnet, dass** die Schwenklagermittel Einstellmittel zur Einstellung des Schwenkwinkels der Leuchteneinheit (39a-d) bezüglich des zugeordneten Leuchtenträgers (15a, 15b) aufweisen.

2. Beleuchtungseinrichtung nach Anspruch 1, **dadurch gekennzeichnet, dass** der Befestigungssockel (12) eine mit der Montageschnittstelle (13) ausgestattete Montageplatte (16) und ein die Sockel-Befestigungsschnittstelle (14) aufweisendes Sockelgehäuse (18) besitzt, wobei Montageplatte (16) und Sockelgehäuse (18) über Befestigungsmittel lösbar aneinander befestigbar oder befestigt sind.

3. Beleuchtungseinrichtung nach Anspruch 2, **dadurch gekennzeichnet, dass** die Befestigungsmittel ein mittels Federmitteln federkraftbelastetes Rastglied (28) umfassen, das zwischen einer Montageplatte (16) und Sockelgehäuse (18) miteinander verrastenden Raststellung, in der das Rastglied (28) in einer Rastaufnahme aufgenommen ist, und einer Freigabestellung bewegbar ist.

4. Beleuchtungseinrichtung nach Anspruch 3, **dadurch gekennzeichnet, dass** das federkraftbelastete Rastglied (28) an der Montageplatte (16) und die Rastaufnahme am Sockelgehäuse (18) ausgebildet sind.

5. Beleuchtungseinrichtung nach Anspruch 3 oder 4, **dadurch gekennzeichnet, dass** die Rastaufnahme eine Rastöffnung (32) aufweist, in die das Rastglied (28) durch eine Einfahr- und Schwenkbewegung einführbar und von dort bei mit dem Sockelgehäuse (18) verrasteter Montageplatte (16) durch Beaufschlagung des Rastglieds (28) entgegen der Federkraft der Federmittel wieder ausfahrbar ist.

6. Beleuchtungseinrichtung nach einem der Ansprüche 2 bis 5, **dadurch gekennzeichnet, dass** das Sockelgehäuse (18) einen Aufnahmeschacht (23) aufweist, in dem eine Akkueinheit (26) mit wenigstens einem Akku oder ein Netzteil (24) aufgenommen ist.

7. Beleuchtungseinrichtung nach einem der Ansprüche 2 bis 6, **dadurch gekennzeichnet, dass** am Sockelgehäuse Kontaktierungselemente (25) zur elektrischen Kontaktierung von Gegenkontakten (22) angeordnet sind und an der Montageplatte (16) die Gegenkontakte (22) ausgebildet sind.

8. Beleuchtungseinrichtung nach einem der vorhergehenden Ansprüche, **dadurch gekennzeichnet, dass** der Befestigungssockel (12) eine Sockel-Bestückungsschnittstelle (34) zu dessen Bestückung mit einem Bewegungsmelder (35) aufweist, und ein Bewegungsmelder (35) vorgesehen ist, der eine Bewegungsmelder-Bestückungsschnittstelle aufweist, über die er am Befestigungssockel (12) befestigbar oder befestigt ist.

9. Beleuchtungseinrichtung nach einem der vorhergehenden Ansprüche, **dadurch gekennzeichnet, dass** der erste und der zweite Leuchtenträger (15a, 15b) jeweils einen gehäuseartigen, mit der Träger-Befestigungsschnittstelle (36) ausgestatteten Basisabschnitt (70) und einen mit der wenigstens einen Träger-Kopplungsstelle (38) ausgestatteten Lagerabschnitt (40) aufweist.

10. Beleuchtungseinrichtung nach einem der vorhergehenden Ansprüche, **dadurch gekennzeichnet, dass** der Schwenkachskörper Bestandteil der Träger-Kopplungsschnittstelle (38) und die Schwenkachskörper-Aufnahme Bestandteil der Gehäuse-Kopplungsschnittstelle (53) ist.

11. Beleuchtungseinrichtung nach einem der vorhergehenden Ansprüche, **dadurch gekennzeichnet, dass** die Einstellmittel miteinander korrespondierende Verzahnungselemente an einerseits der Träger-Kopplungsschnittstelle (38) und andererseits der Gehäuse-Kopplungsschnittstelle (53) aufweisen.

12. Beleuchtungseinrichtung nach einem der vorhergehenden Ansprüche, **dadurch gekennzeichnet, dass** die Leuchtmittel einer jeweiligen Leuchteneinheit (39a-d) wenigstens eine LED (56) umfassen.

13. Beleuchtungseinrichtung nach einem der vorhergehenden Ansprüche, **dadurch gekennzeichnet, dass** wenigstens eine der Leuchteneinheiten (39a,c) mit einem Leuchtengehäuse (52) mit Klarscheibe (55) zur Abdeckung der Leuchtmittel und wenigstens eine Leuchteneinheit (39b,d) mit einem Leuchtengehäuse (52) mit Streuscheibe (63) zur Abdeckung der Leuchtmittel ausgestattet ist, wobei wahlweise eine einzelne Leuchteneinheit (39a) mit Klarscheibe oder eine einzelne Leuchteneinheit (39b) mit Streuscheibe (62) am ersten Leuchtenträger (15a) lagerbar oder gelagert ist oder mehrere Leuchteneinheiten (39c,d) mit Klarscheibe (55) und/oder Streuscheibe (62) am zweiten Leuchtenträger (15b) lagerbar oder gelagert sind.

14. Beleuchtungseinrichtung nach einem der vorhergehenden Ansprüche, **gekennzeichnet durch** ein Solarmodul (27) zur Energieversorgung der Leuchtmittel der wenigstens einen angekoppelten Leuchteneinheit (39a-d).

## Claims

1. Illumination device, comprising the following components:
- a mounting base (12) having a mounting interface (13) for mounting on the underground and a base mounting interface (14) for mounting a lamp support (15a, 15b),
- a first lamp support (15a) having a support mounting interface (36) for mounting on the associated base mounting interface (14) and comprising a single support coupling interface (38) for coupling to a lamp unit (39a, b),
- a second lamp support (15b) having a support mounting interface (36) for mounting on the associated base mounting interface (14) and comprising a plurality of support coupling interfaces (38) for coupling to a plurality of lamp units (39a-d), wherein optionally the first or the second lamp support (15a, 15b) can be or is mounted on the mounting base (12) via the mutually assigned mounting interfaces (14, 36),
- a plurality of lamp units (39a-d), each of which comprises a lamp housing (52) and a plurality of illumination means accommodated in the lamp housing (52), wherein the lamp housing (52) comprises a housing coupling interface (53), via which the lamp unit (39a-d) can be coupled to the associated support coupling interface (38) with the lamp support (15a, 15b), wherein optionally an individual lamp unit (39a, b) can be or is coupled to the first lamp support (15a) via the mutually assigned coupling interfaces (38, 53) or one or more lamp units (39a-d) can be or are coupled to the second lamp support (15b) via the mutually assigned coupling interfaces (38, 53), wherein at least one of the lamp units (39a-d) can be or is pivotably mounted on the associated lamp support (15a, 15b) via pivot bearing means, wherein the pivot bearing means are parts of the mutually assigned support coupling interface (38) of the respective lamp support (15a, 15b) and the housing coupling interface (53) of the lamp housing (52) of the lamp unit (39a-d), and wherein the pivot bearing means comprise a pin-type pivot axis body and a pivot axis body receptacle in which the pivot axis body can be or is pivotably mounted, **characterised in that** the pivot bearing means comprise adjusting means for adjusting the pivot angle of the lamp unit (39a-d) relative to the associated lamp support (15a, 15b).

2. Illumination device according to claim 1, **characterised in that** the mounting base (12) comprises a mounting plate (16) provided with the mounting interface (13) and a base housing (18) provided with the base mounting interface (14), wherein the mounting plate (16) and the base housing (18) can be or are releasably secured to one another via fastening means.

3. Illumination device according to claim 2, **characterised in that** the fastening means comprise a latching member (28), which is spring-loaded by spring means and which can be moved between a latching position, which latches together the mounting plate (16) and the base housing (18) and in which the latching member (28) is located in a latching receptacle, and a release position.

4. Illumination device according to claim 3, **characterised in that** the spring-loaded latching member (28) is formed on the mounting plate (16) and the latching receptacle is formed on the base housing (18).

5. Illumination device according to claim 3 or 4, **characterised in that** the latching receptacle has a latching opening (32), into which the latching member (28) can be inserted by means of an insertion and pivoting movement and from where is can be removed again by applying a force against the spring force of the spring means to the latching member (28) if the mounting plate (16) is latched to the base housing (18).

6. Illumination device according to any of claims 2 to 5, **characterised in that** the base housing (18) has a location shaft (23), in which a battery unit (26) with at least one battery or a power pack is located.

7. Illumination device according to any of claims 2 to 6, **characterised in that** contacting elements (25) for the electric contacting of mating contacts (22) are located on the base housing and the mating contacts (22) are formed on the mounting plate (16).

8. Illumination device according to any of the preceding claims, **characterised in that** the mounting base (12) comprises a base location interface (34) for the location of a motion detector (35), and **in that** a motion detector (35) having a motion detector location interface via which it can be or is secured to the mounting base (12) is provided.

9. Illumination device according to any of the preceding claims, **characterised in that** the first and the second lamp support (15a, 15b) each has a housing-type base section (70) equipped with the support mounting interface (36) and a bearing section (40) equipped with the at least one support coupling interface (38).

10. Illumination device according to any of the preceding claims, **characterised in that** the pivot axis body is a part of the support coupling interface (38) and the pivot axis body receptacle is a part of the housing coupling interface (53).

11. Illumination device according to any of the preceding claims, **characterised in that** the adjusting means comprise mutually corresponding toothing elements on the support coupling interface (38) on the one hand and on the housing coupling interface (53) on the other hand.

12. Illumination device according to any of the preceding claims, **characterised in that** the illumination means of a respective lamp unit (39a-d) comprise at least one LED (56).

13. Illumination device according to any of the preceding claims, **characterised in that** at least one of the lamp units (39a, c) is provided with a lamp housing (52) with a clear lens (55) for covering the illumination means and least one of the lamp units (39b, d) is provided with a lamp housing (52) with a diffusing lens (63) for covering the illumination means, wherein optionally an individual lamp unit (39a) with a clear lens or an individual lamp unit (39b) with a diffusing lens (62) can be or is mounted on the first lamp support (15a), or several lamp units (39c, d) with a clear lens (55) and/or a diffusing lens (62) can be or are mounted on the second lamp support (15b).

14. Illumination device according to any of the preceding claims, **characterised by** a solar module (27) for the energy supply of the illumination means of the at least one coupled lamp unit (39a-d).

## Revendications

1. Dispositif d'éclairage comprenant les composants suivants :
- un socle de fixation (12) qui présente une interface de montage (13) pour son montage sur le fond et une interface de fixation de socle (14) pour la fixation d'un support de lampe (15a, 15b),
- un premier support de lampe (15a) qui présente une interface de fixation de support (36) pour la fixation sur l'interface de fixation de socle (14) associée et possède une interface de couplage de support (38) individuelle pour le couplage avec une unité de lampe (39a, b),
- un second support de lampe (15b) qui présente une interface de fixation de support (36) pour la fixation sur l'interface de fixation de socle associée (14) et présente plusieurs interfaces de couplage de support (38) pour le couplage avec plusieurs unités de lampe (39a-d), au choix le premier ou le second support de lampe (15a, 15b) étant ou pouvant être fixé sur le socle de fixation (12) par le biais des interfaces de fixation (14, 36) associées l'une à l'autre,
- plusieurs unités de lampe (39a-d) qui présentent respectivement un boîtier de lampe (52) et plusieurs moyens de lampe reçus dans le boîtier de lampe (52), le boîtier de lampe (52) présentant une interface de couplage de boîtier (53), par laquelle l'unité de lampe (39a-d) est couplable sur l'interface de couplage de support (38) associée avec le support de lampe (15a, 15b), au choix une unité de lampe individuelle (39a, b) étant ou pouvant être couplée par les interfaces de couplage (38, 53) associées l'une à l'autre avec le premier support de lampe (15a), ou une ou plusieurs unités de lampe (39a-d) étant ou pouvant être couplées par les interfaces de couplage (38, 53) associées l'une à l'autre avec le second support de charge (15b), au moins l'une des unités de lampe (39a-d) étant ou pouvant être logées de manière pivotante par le biais de moyens de palier pivotant sur le support de lampe associé (15a, 15b), les moyens de palier pivotant étant des éléments de l'interface de couplage de support (38) associée l'une à l'autre du support de lampe (15a, 15b) concerné et de l'interface de couplage de boîtier (53) du boîtier de lampe (52) de l'unité de lampe (39a-d), et les moyens de palier pivotant présentant un corps d'axe de pivotement de type goupille et un logement de corps d'axe de pivotement, dans lequel le corps d'axe de pivotement est ou peut être logé de manière pivotante, **caractérisé en ce que** les moyens de palier pivotant présentent des moyens de réglage pour le réglage de l'angle de pivotement de l'unité de lampe (39a-d) par rapport au support de lampe (15a, 15b) associé.

2. Dispositif d'éclairage selon la revendication 1, **caractérisé en ce que** le socle de fixation (12) possède une plaque de montage (16) équipée de l'interface de montage (13) et un boîtier de socle (18) présentant l'interface de fixation de socle (14), la plaque de montage (16) et le boîtier de socle (18) étant ou pouvant être fixés de manière détachable l'un à l'autre par le biais de moyens de fixation.

3. Dispositif d'éclairage selon la revendication 2, **caractérisé en ce que** les moyens de fixation comportent un organe d'encliquetage (28) sollicité par force élastique à l'aide de moyens de ressort, qui est mobile entre une position d'encliquetage encliquetant entre eux la plaque de montage (16) et le boîtier de socle (18), dans laquelle l'organe d'encliquetage (28) est reçu dans un logement d'encliquetage, et une position de libération.

4. Dispositif d'éclairage selon la revendication 3, **caractérisé en ce que** l'organe d'encliquetage (28) sollicité par force élastique est réalisé sur la plaque de montage (16) et le logement d'encliquetage est réalisé sur le boîtier de socle (18).

5. Dispositif d'éclairage selon la revendication 3 ou 4, **caractérisé en ce que** le logement d'encliquetage présente une ouverture d'encliquetage (32), dans laquelle l'organe d'encliquetage (28) peut être introduit par un mouvement d'entrée et de pivotement et de là peut être sorti de nouveau en cas de plaque de montage (16) encliquetée avec le boîtier de socle (18) par la sollicitation de l'organe d'encliquetage (28) dans le sens inverse de la force de ressort des moyens de ressort.

6. Dispositif d'éclairage selon l'une quelconque des revendications 2 à 5, **caractérisé en ce que** le boîtier de socle (18) présente un puits de réception (23), dans lequel une unité d'accumulateur (26) est reçue avec au moins un accumulateur ou un bloc d'alimentation (24).

7. Dispositif d'éclairage selon l'une quelconque des revendications 2 à 6, **caractérisé en ce que** sur le boîtier de socle, des éléments d'établissement de contact (25) sont agencés pour l'établissement de contact électrique de contacts antagonistes (22) et les contacts antagonistes (22) sont réalisés sur la plaque de montage (16).

8. Dispositif d'éclairage selon l'une quelconque des revendications précédentes, **caractérisé en ce que** le socle de fixation (12) présente une interface d'équipement de socle (34) pour son équipement avec un détecteur de mouvement (35) et un détecteur de mouvement (35) est prévu, lequel présente une interface d'équipement de détecteur de mouvement, par laquelle il est ou peut être fixé sur le socle de fixation (12).

9. Dispositif d'éclairage selon l'une quelconque des revendications précédentes, **caractérisé en ce que** le premier et le second support de lampe (15a, 15b) présentent respectivement une section de base (70) équipée de l'interface de fixation de support (36), de type boîtier et une section de palier (40) équipée de l'au moins un point de couplage de support (38).

10. Dispositif d'éclairage selon l'une quelconque des revendications précédentes, **caractérisé en ce que** le corps d'axe de pivotement fait partie de l'interface de couplage de support (38) et le logement de corps d'axe de pivotement fait partie de l'interface de couplage de boîtier (53).

11. Dispositif d'éclairage selon l'une quelconque des revendications précédentes, **caractérisé en ce que** les moyens de réglage présentent des éléments de denture correspondants les uns aux autres d'une part sur l'interface de couplage de support (38) et d'autre part sur l'interface de couplage de boîtier (53).

12. Dispositif d'éclairage selon l'une quelconque des revendications précédentes, **caractérisé en ce que** les moyens de lampe d'une unité de lampe respective (39a-d) comportent au moins une DEL (56).

13. Dispositif d'éclairage selon l'une quelconque des revendications précédentes, **caractérisé en ce qu'**au moins une des unités de lampe (39a, c) est équipée d'un boîtier de lampe (52) avec un verre transparent (55) pour le recouvrement des moyens de lampe et au moins une unité de lampe (39b, d) est équipée d'un boîtier de lampe (52) avec un verre diffusant (63) pour le recouvrement des moyens de lampe, au choix une unité de lampe individuelle (39a) avec un verre transparent ou une unité de lampe individuelle (39b) avec un verre diffusant (62) étant ou pouvant être logée sur le premier support de lampe (15a) ou plusieurs unités de lampe (39c, d) avec un verre transparent (55) et/ou un verre diffusant (62) étant ou pouvant être logées sur le second support de lampe (15b).

14. Dispositif d'éclairage selon l'une quelconque des revendications précédentes, **caractérisé par** un module solaire (27) pour l'alimentation en énergie des moyens de lampe d'au moins une unité de lampe couplée (39a-d).
